# EUROPEAN PATENT SPECIFICATION

(11) **EP 3 944 693 B1**
(45) Date of publication and mention of the grant of the patent: **20.03.2024**
(21) Application number: 20776437.4
(22) Date of filing: 27.03.2020
(51) Int. Cl.: H04L 5/00, H04W 72/0453, H04W 72/23, H04W 52/02

(54) **TERMINAL ENERGY SAVING METHOD BASED ON BANDWIDTH PART**
ENERGIEEINSPARUNGSVERFAHREN FÜR ENDGERÄT AUF DER GRUNDLAGE EINES BANDBREITENTEILS
PROCÉDÉ D'ÉCONOMIE D'ÉNERGIE DE TERMINAL BASÉ SUR UNE PARTIE DE BANDE PASSANTE

(30) Priority: 28.03.2019 CN 201910243604
(43) Date of publication of application: 26.01.2022
(73) Proprietor: China Mobile Communication Co., Ltd Research Institute, Beijing 100053 (CN); CHINA MOBILE COMMUNICATIONS GROUP CO., LTD., Beijing 100032 (CN)
(72) Inventor: YANG, Tuo, Beijing 100032 (CN); HU, Lijie, Beijing 100032 (CN); WANG, Fei, Beijing 100032 (CN); WANG, Qixing, Beijing 100032 (CN); LIU, Guangyi, Beijing 100032 (CN); LI, Nan, Beijing 100032 (CN)
(74) Representative: J A Kemp LLP
(86) International application number: PCT/CN2020/081732
(87) International publication number: WO 2020/192765

(56) References cited:
- CN-A- 109 391 985
- CN-A- 109 392 174
- CN-A- 109 511 171
- US-A1- 2018 343 154
- MEDIATEK INC: "NR UE Power Saving Designs", 3GPP DRAFT; R1-1903353_NR UE POWER SAVING DESIGNS_REVFINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 23 February 2019 (2019-02-23), XP051601029, Retrieved from the Internet: URL:http://www.3gpp.org/ftp/tsg%5Fran/WG1% 5FRL1/TSGR1%5F96/Docs/R1%2D1903353%2Ezip [retrieved on 2019-02-23]
- LG ELECTRONICS: "Discussions on triggering adaptation of UE power consumption characteristics", 3GPP DRAFT; R1-1900600, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei, Taiwan; 20190121 - 20190125 20 January 2019 (2019-01-20), XP051593447, Retrieved from the Internet: URL:http://www.3gpp.org/ftp/Meetings%5F3GP P%5FSYNC/RAN1/Docs/R1%2D1900600%2Ezip [retrieved on 2019-01-20]
- CATT: "Summary of UE Power Saving Schemes", 3GPP DRAFT; R1-1903411_SUMMARY OF AI-7 2 9 2 UE POWER SAVING SCHEME_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Athens, Greece; 20190225 - 20190301 26 February 2019 (2019-02-26), XP051601086, Retrieved from the Internet: URL:http://www.3gpp.org/ftp/tsg%5Fran/WG1% 5FRL1/TSGR1%5F96/Docs/R1%2D1903411%2Ezip [retrieved on 2019-02-26]
- QUALCOMM INCORPORATED: "Potential Techniques for UE Power Saving", 3GPP DRAFT; R1-1903016, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN-WG1 16 February 2019 (2019-02-16), pages 1-33, XP051600713, Retrieved from the Internet: URL:http://www.3gpp.org/ftp/tsg%5Fran/WG1% 5FRL1/TSGR1%5F96/Docs/R1%2D1903016%2Ezip [retrieved on 2019-02-16]
- SONY: "Adaptive power saving techniques based on UE power consumption characteristics", 3GPP TSG RAN WG1 Meeting #95, R1-1812749, 16 November 2018 (2018-11-16), XP051554707, DOI: 20200512171546A

## Description

### CROSS-REFERENCE TO RELATED APPLICATIONS

The application claims priority to Chinese Patent Application No. 201910243604.1 filed on March 28, 2019.

### TECHNICAL FIELD

Embodiments of the disclosure relate to the technical field of communication, and in particular to a method and device for a terminal power saving based on a Bandwidth Part (BWP).

### BACKGROUND

A 5^{th} generation (5G) New Radio (NR) system needs to support Enhanced Mobile Broadband (eMBB), Massive Machine Type Communication (mMTC), and Ultra-Reliable Low Latency Communication (uRLLC) deployment schemes. The International Telecommunication Union (ITU) has determined eight key functions of 5G, i.e. a user experienced data rate of 100 Mbps, a delay of 1 ms, a connection density supporting one million devices per square kilometer, etc. 5G NR standard of Release 15 focuses mainly on the eMBB and uRLLC deployment schemes. In order to provide more market space and life cycle for a Narrow Band Internet of Things (NB-IoT), 5G does not have a special design for the mMTC deployment scheme. Therefore, 5G standard design in the related art may encounter some problems in providing a massive connection service.

In order to reduce power consumption of a terminal, a BWP mechanism is introduced in 5G standard, which allows the terminal to be configured to operate on a subset that is less than a system bandwidth. An initial uplink (UL) BWP and an initial downlink (DL) BWP are defined in a system information block 1. The initial UL BWP is used for the terminal to initiate a random access, and the initial DL BWP is used for the terminal to receive a paging message and other system information.

At present, NR supports configuring multiple BWPs for a User Equipment (UE), and high-layer signaling configures a group of DL BWPs and a group of UL BWPs for the terminal. The number of BWPs configurable for the terminal by a network side is determined by the report capability of the terminal. For example, a low-capability terminal supports being configured with at most two DL BWPs and two UL BWPs over each carrier, and a high-capability terminal supports being configured with at most four DL BWPs and four UL BWPs over each carrier. NR supports handover between BWPs based on Radio Resource Control (RRC) signaling, Downlink Control Information (DCI) signaling, and timers.

In a research for power saving of a terminal of Release 16, power of the terminal may be saved from a time domain, an antenna domain, Physical Downlink Control Channel (PDCCH) detection, etc. For example, in the time domain, power may be saved by relaxing a physical channel processing time line of the terminal. For example, when a slot offset k0 from DCI to Physical Downlink Shared Channel (PDSCH), which is configured by a network side for the terminal, is 0, that is, during one-slot scheduling, the terminal must buffer a part of PDSCH symbols in each slot, but when the slot offset k0 from the DCI to the PDSCH, which is configured by the network side for the terminal, is greater than 0, that is, during cross-slot scheduling, the terminal may first perform PDCCH detection, and when it is determined that the terminal is scheduled, the PDSCH is started to be buffered, so that unnecessary PDSCH buffering is avoided, and power may be saved. In the antenna domain, when the network side may indicate Multiple Input Multiple Output (MIMO) layers or antennas used by the terminal, the terminal may use fewer MIMO layers or antennas to receive or transmit data, so that the terminal may save power. In the PDCCH detection, when a base station may indicate a dynamic change of a monitoring periodicity of a search space for the terminal, the chances of the terminal detecting the PDCCH may be reduced to realize power saving.

At present, these parts of parameters associated with power consumption of the terminal are configured in each DL BWP or UL BWP, such as a PDSCH-time domain resource allocation (including the configuration of the slot offset k0 from the DCI to the PDSCH), a Physical Uplink Shared Channel (PUSCH)-time domain resource allocation (including the configuration of a slot offset k2 from the DCI to the PUSCH), the monitoring periodicity of the search space, etc., but there is only one configuration parameter in one BWP. Furthermore, at present, the above-described parameters associated with power consumption of the terminal, such as the antennas used, are not configured with signaling.

MEDIATEK INC: "NR UE Power Saving Designs", 3GPP DRAFT; R1-1903353, XP051601029 discloses that DCI and timer based power profile switching for the active BWP is introduced for NR.

### SUMMARY

An objective of embodiments of the disclosure is to provide a method and device for a terminal power saving based on a BWP, which may quickly implement conversion of parameters for the terminal power saving through handover between different states of the BWP.

The present invention is defined in the claims. Any embodiment in the description that does not fall within the scope of the claims shall be regarded as an example for understanding the present invention.

According to the method and device for a terminal power saving based on a BWP provided by the embodiments of the disclosure, one BWP has at least two configuration states or configuration indexes, and one of the at least two configuration states or configuration indexes is configured for the terminal through the first information field, so that the terminal may determine the configuration state or configuration index of the active BWP based on the first information field, and rapid handover of configuration parameters of the active BWP is realized. Therefore, rapid power saving of the terminal may be realized through rapid handover between different states of the BWP. In addition, based on a currently supported DCI-based BWP handover framework, the embodiments of the disclosure have less influence on the architecture in the related art, do not need additional signaling, and have the advantage of low implementation cost.

### BRIEF DESCRIPTION OF THE DRAWINGS

Various other advantages and benefits will become apparent to those of ordinary skill in the art upon reading the following detailed descriptions of alternative implementations. The drawings are only for the purpose of illustrating alternative implementations and are not construed as limiting the disclosure. Furthermore, throughout the drawings, like reference numerals designate like parts. In the drawings:
FIG. 1 is a schematic diagram of an application scenario of a method for a terminal power saving based on a BWP according to an embodiment of the disclosure;
FIG. 2 is a flowchart of a method for a terminal power saving based on a BWP provided by an embodiment of the disclosure;
FIG. 3 is another flowchart of a method for a terminal power saving based on a BWP provided by an embodiment of the disclosure;
FIG. 4 is a flowchart of a method for a terminal power saving based on a BWP provided by another embodiment of the disclosure;
FIG. 5 is another flowchart of a method for a terminal power saving based on a BWP provided by another embodiment of the disclosure;
FIG. 6 is a first structural diagram of a network device according to an embodiment not being part of the disclosure;
FIG. 7 is a second structural diagram of a network device according to an embodiment of the disclosure;
FIG. 8 is a first structural diagram of a terminal according to an embodiment not being part of the disclosure;
FIG. 9 is a second structural diagram of a terminal according to an embodiment of the disclosure;
FIG. 10 is a structural diagram of a network device according to another embodiment not being part of the disclosure.
FIG. 11 is a structural diagram of a terminal according to another embodiment not being part of the disclosure.

### DETAILED DESCRIPTION

Exemplary embodiments of the disclosure will be described in more detail below with reference to the accompanying drawings. While the exemplary embodiments of the disclosure are shown in the drawings, it should be understood that the disclosure may be implemented in various forms and should not be limited to the embodiments set forth herein. Rather, these embodiments are provided so that the disclosure may be understood more thoroughly, and the scope of the disclosure may be fully conveyed to those skilled in the art.

In the description and claims of the disclosure, terms "first", "second", etc. are used to distinguish similar objects, and do not need to describe a specific sequence or a sequential order. It will be appreciated that data used in such a way may be exchanged under appropriate conditions, so that the embodiments of the disclosure described here may be implemented, for example, in a sequence other than sequences shown or described here. In addition, terms "include" and "have" and any variations thereof are intended to cover non-exclusive inclusions. For example, processes, methods, systems, products or devices containing a series of steps or units are not limited to those clearly listed steps or units, instead, other steps or units which are not clearly listed or are inherent to these processes, methods, products or devices may be included. "and/or" in the description and claims means at least one of the connected objects.

The technologies described herein are not limited to Long Time Evolution (LTE)/LTE-Advanced (LTE-A) systems, and may also be used in various wireless communication systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), and other systems. Terms "system" and "network" are often used interchangeably. The CDMA system may implement radio technologies such as CDMA 2000, Universal Terrestrial Radio Access (UTRA), etc. UTRA includes Wideband Code Division Multiple Access (WCDMA) and other CDMA variants. The TDMA system may implement radio technologies such as Global System for Mobile Communication (GSM). The OFDMA system may implement radio technologies such as Ultra Mobile Broadband (UMB), Evolution-UTRA (E-UTRA), Institute Of Electrical And Electronics Engineers (IEEE) 802.11 (Wireless Fidelity (Wi-Fi)), IEEE 802.16 (World Interoperability for Microwave Access (WiMAX)), IEEE 802.20, Flash-OFDM, etc. UTRA and E-UTRA are part of a Universal Mobile Telecommunications System (UMTS). LTE and higher-level LTE such as LTE-A, are new releases of UMTS that use E-UTRA. UTRA, E-UTRA, UMTS, LTE, LTE-A, and GSM are described in documents from an organization named "3rd Generation Partnership Project (3GPP)". CDMA 2000 and UMB are described in documents from an organization named "3rd Generation Partnership Project 2 (3GPP2)". The technologies described herein may be used in the above-mentioned systems and radio technologies, as well as other systems and radio technologies. However, the following description describes NR systems for the purpose of example, and NR terms are used in most of the following description, although these technologies are also applicable to applications other than NR system applications.

The following description provides examples and does not limit the scope, applicability, or configuration set forth in the claims.

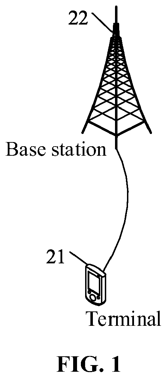

Referring to FIG. 1, a block diagram of a wireless communication system to which embodiments of the disclosure may be applied is shown. The wireless communication system includes a terminal 11 and a base station 12. The terminal 11 may also be referred to as a user terminal or UE. The terminal 11 may be a cell phone, a tablet personal computer, a laptop computer, a Personal Digital Assistant (PDA), a Mobile Internet Device (MID), a wearable device or a terminal-side device such as an onboard device, etc. It should be noted that the specific type of the terminal 11 is not limited in the embodiments of the disclosure. The base station 12 may be a variety of base stations and/or core network elements. The base stations may be base stations under 5G and advanced releases thereafter (e.g., next Generation NodeB (gNB), 5GNRNB, etc.), or base stations in other communication systems (e.g., evolved NodeB (eNB), Wireless Local Area Network (WLAN) access points, or other access points, etc.). The base station 12 may be referred to as a Node B (NB), an eNB, an access point, a Base Transceiver Station (BTS), a radio base station, a radio transceiver, a Basic Service Set (BSS), an Extended Service Set (ESS), a node B, an evolved node B (eNB), a home node B, a home eNB, a WLAN access point, a WiFi node, or some other suitable terms in the art, so long as the same technical effect is achieved. The base station is not limited to a particular technical vocabulary, and it should be noted that the base station in the NR system is taken as an example only in the embodiments of the disclosure. However, the specific type of the base station is not limited.

The base station 12 may communicate with the terminal 11 under the control of a base station controller. In various examples, the base station controller may be part of a core network or some base stations. Some base stations may communicate control information or user data with the core network via backhaul. In some examples, some of these base stations may communicate with each other directly or indirectly through backhaul links, which may be wired or wireless communication links. The wireless communication system may support operation on multiple carriers (waveform signals with different frequencies). A multi-carrier transmitter may simultaneously transmit modulated signals over the multiple carriers. For example, each communication link may be a multi-carrier signal modulated according to various radio technologies. Each of the modulated signals may be transmitted over different carriers and may carry control information (e.g., reference signals, control channels, etc.), overhead information, data, etc.

The base station 12 may communicate wirelessly with the terminal 11 via one or more access point antennas. Each base station may provide communication coverage for a respective coverage region. A coverage region of an access point may be divided into sectors that form only a portion of the coverage region. The wireless communication system may include different types of base stations (e.g., macro base stations, micro base stations, or pico base stations). The base stations may also use different radio technologies, such as cellular or WLAN radio access technologies. The base stations may be associated with the same or different access networks or operator deployments. Coverage regions of different base stations (including coverage regions of the same or different types of base stations, coverage regions using the same or different radio technologies, or coverage regions belonging to the same or different access networks) may overlap.

The communication link in the wireless communication system may include a UL for carrying UL transmission (e.g., from the terminal 11 to the base station 12), or a DL for carrying DL transmission (e.g., from the base station 12 to the terminal 11). The UL transmission may also be referred to as reverse link transmission, while the DL transmission may also be referred to as forward link transmission. The DL transmission may be performed using a licensed band, an unlicensed band, or both. Similarly, the UL transmission may be performed using a licensed band, an unlicensed band, or both.

It should be noted that the network device according to the embodiments of the disclosure may be implemented by a base station (an access network node) of FIG. 1, by a core network node, or by both the access network node and the core network node.

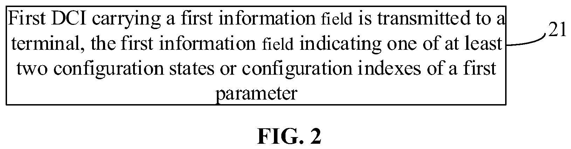

Referring to FIG. 2, a method for a terminal power saving based on a BWP provided by the embodiments of the disclosure, when applied to a network device such as a base station, includes the following operations.

In operation 21, first DCI carrying a first information field is transmitted to a terminal. The first information field indicates one of at least two configuration states or configuration indexes of a first parameter. The first parameter is a configuration parameter associated with an active BWP of the terminal. The active BWP includes an active UL BWP or an active DL BWP.

Here, specifically, the first DCI may be any one of the following DCI:
DCI format 0_0 scheduling PUSCH or PDSCH;
DCI format 0_1 scheduling PUSCH or PDSCH;
DCI format 1_0 scheduling PUSCH or PDSCH; or
DCI format 1_1 scheduling PUSCH or PDSCH.

Of course, the first DCI may also be new DCI format, such as a custom DCI. The format of the first DCI is not specifically limited by the embodiments of the disclosure.

Here the first parameter generally includes multiple parameters, and includes at least two configuration states or configuration indexes. Each of the at least two configuration states or configuration indexes corresponds to a group of parameter values of the multiple parameters. The first information field may be a field having a predetermined bit length, and one configuration state or configuration index of the first parameter corresponds to a respective value of the first information field. Therefore, the configuration state or configuration index of the first parameter may be determined by the value of the first information field, thereby acquiring a specific parameter value of each parameter in the first parameter.

Through the above operations, according to the embodiments of the disclosure, one BWP has at least two configuration states or configuration indexes, and one of the at least two configuration states or configuration indexes is configured for the terminal through the first information field, so that the terminal may determine the configuration state or configuration index of the active BWP based on the first information field, and rapid handover of configuration parameters of the active BWP is realized. Therefore, rapid power saving of the terminal may be realized through rapid handover between different states of the BWP.

Specifically, different states of the first parameter may realize different power saving states, therefore the embodiments of the disclosure may realize the handover of the configuration state or configuration index of the first parameter based on the first information field in the operation 21, and rapidly realize the conversion of parameters for the terminal power saving.

Specifically, the first parameter in the embodiments of the disclosure includes more of:
minimum value(s) of slot offset k0 between DCI and its scheduled PDSCH;
minimum value(s) of slot offset k2 between DCI and its scheduled PUSCH;
a PDSCH-time domain resource allocation;
a PUSCH-time domain resource allocation;
a minimum value of Hybrid Automatic Repeat Request (HARQ) feedback timing k1 of the PDSCH;
MIMO-layers;
max MIMO-layers;
number of reception antennas;
number of transmission antennas;
an index of a search space;
a monitoring periodicity of the search space;
monitoring symbol(s) of the search space; or
Discontinuous Reception (DRX) configuration parameter(s).

In the embodiments of the disclosure, before the operation 21, the network device may also determine, according to a determined target configuration state or target configuration index of the first parameter of the active BWP of the terminal, a value of the first information field in the first DCI. Each configuration state or configuration index of the first parameter corresponds to a respective value of the first information field. Specifically, the target configuration state or the target configuration index of the first parameter of the active BWP may be specifically set according to an actual application scenario, which is not specifically limited by the embodiments of the disclosure.

In the embodiments of the disclosure, the network device and the terminal side need to obtain the parameter value of each parameter in the first parameter under each configuration state or configuration index in advance.

As an implementation, the parameter value of each parameter in the first parameter under each configuration state or configuration index may be defined by the standard in advance.

As another implementation, the parameter value may be configured by the network device for the terminal in advance. At this moment, before the operation 21, the network device according to the embodiments of the disclosure may also configure, through high-layer signaling (e.g. RRC signaling), at least two parameter values of at least one parameter in the first parameter for the terminal. Each of the at least two parameter values is associated with a respective one of the at least two configuration states or configuration indexes.

Specifically, the at least two parameter values of at least one parameter in the first parameter may be configured through an Information Element (IE) associated with the BWP.

Or, the at least two parameter values of at least one parameter in the first parameter may be configured through an IE associated with a physical channel respectively. The physical channel includes at least one of: PDCCH, Physical Uplink Control Channel (PUCCH), PDSCH, or PUSCH.

It should be noted that the embodiments of the disclosure may indicate the active BWP of the terminal while indicating the configuration state or configuration index of the configuration parameter associated with the active BWP of the terminal in the operation 21. At this moment, a second information field indicating the active BWP of the terminal is carried in the first DCI. Of course, the embodiments of the disclosure may also indicate the active BWP of the terminal through another signaling message. For example, second DCI different from the first DCI is transmitted to the terminal. A third information field indicating the active BWP of the terminal may be carried in the second DCI. The second DCI may be transmitted before the first DCI or may be transmitted after the first DCI, which is not specifically limited by the embodiments of the disclosure.

The method for a terminal power saving based on a BWP according to the embodiments of the disclosure is described as above from a network device side, and is further described below from a terminal side.

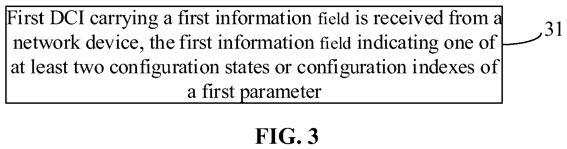

Referring to FIG. 3, a method for a terminal power saving based on a BWP provided by the embodiments of the disclosure, when applied to the terminal, includes the following operations.

In operation 31, first DCI carrying a first information field is received from a network device. The first information field indicates one of at least two configuration states or configuration indexes of a first parameter. The first parameter is a configuration parameter associated with an active BWP of the terminal. The active BWP includes an active UL BWP or an active DL BWP.

Here the terminal may receive the first DCI transmitted by the network device, and acquire the configuration state or configuration index of the first parameter associated with the active BWP from the first DCI, rapid handover of configuration parameters of the active BWP is realized, and rapid conversion of the power saving parameters of the terminal may further be realized through handover between different states of the BWP. For example, the terminal may be rapidly switched to a parameter value of the first parameter which is more power-saving, so that rapid power saving of the terminal is realized.

Specifically, the first parameter includes more of:
minimum value(s) of slot offset k0 between DCI and its scheduled PDSCH;
minimum value(s) of slot offset k2 between DCI and its scheduled PUSCH;
a PDSCH-time domain resource allocation;
a PUSCH-time domain resource allocation;
a minimum value of HARQ feedback timing k1 of the PDSCH;
MIMO-layers;
max MIMO-layers;
number of reception antennas;
number of transmission antennas;
an index of a search space;
a monitoring periodicity of the search space;
monitoring symbol(s) of the search space; or
DRX configuration parameter(s).

Here in the method, after receiving the first DCI in the operation 31, the terminal may perform the following judgment and processing. In response to a target configuration state or a target configuration index indicated by the first information field in the first DCI being different from a current configuration state or a current configuration index of the first parameter associated with the active BWP of the terminal, associated configuration information of the first parameter is set according to the target configuration state or the target configuration index. In response to the target configuration state or the target configuration index being the same as the current configuration state or the current configuration index, the first DCI may be ignored (or discarded directly).

As an alternative, in the embodiments of the disclosure, each configuration state or configuration index of the first parameter corresponds to a respective value of the first information field.

In the embodiments of the disclosure, the network device and the terminal side need to obtain the parameter value of each parameter in the first parameter under each configuration state or configuration index in advance. As an implementation, the parameter value of each parameter in the first parameter under each configuration state or configuration index may be defined by the standard in advance. As another implementation, the terminal may receive a configuration state or configuration index of the first parameter configured by the network device in advance and the parameter value of each parameter under each configuration state or configuration index. For example, before the operation 31, the terminal may also receive at least two parameter values of at least one parameter in the first parameter configured by the network device through high-layer signaling. Each of the at least two parameter values is associated with a respective one of the at least two configuration states or configuration indexes.

Specifically, the at least two parameter values of at least one parameter in the first parameter are configured through an IE associated with the BWP. At this moment, the terminal may know, according to the received IE associated with the BWP, the configuration state or configuration index of the first parameter and the parameter value of each parameter under each configuration state or configuration index. Or, the at least two parameter values of at least one parameter in the first parameter are configured through an IE associated with a physical channel. The physical channel includes at least one of: PDCCH, PUCCH, PDSCH, or PUSCH. At this moment, the terminal may know, according to the IE associated with each physical channel, the configuration state or configuration index of the first parameter and the parameter value of each parameter under each configuration state or configuration index.

As an alternative, in the embodiments of the disclosure, a second information field indicating the active BWP of the terminal is simultaneously carried in the first DCI, to indicate the active BWP and configuration parameters associated with the active BWP of the terminal in one DCI. As another alternative, the terminal may also receive second DCI carrying a third information field indicating the active BWP of the terminal from the network device, so that the active BWP and configuration parameters associated with the active BWP of the terminal are acquired by different DCI, respectively.

In addition, in the embodiments of the disclosure, before the operation 31, the terminal may also report a BWP capability parameter of the terminal to the network device. The BWP capability parameter indicates whether the terminal supports adaptation of at most N BWPs via DCI or a timer. Each of the N BWPs supports being configured with frequency domain position (e.g. start-stop position of a frequency domain) and bandwidth configuration information (e.g. bandwidth size), subcarrier spacing configuration information, CP configuration information, and at least two parameter values of at least one parameter in the first parameter. N is an integer equal to or greater than 2.

The method for a terminal power saving based on a BWP according to the embodiments of the disclosure is described as above. The above embodiments are further described below by way of examples.

### First Example:

A network device configures a DL BWP #1 for a terminal. Configuration information includes a frequency domain position bandwidth of 20 MHz, a subcarrier spacing of 30 kHz, a normal CP, and a first parameter associated with the BWP #1. The first parameter contains two configuration states, namely a state or index of 0 and a state or index of 1. A parameter configuration value of a configuration state #0 of the first parameter includes: a minimum value of a slot offset between DCI and its scheduled PDSCH is equal to 0, a minimum value of a slot offset between DCI and its scheduled PUSCH is equal to 0, max MIMO-layers are equal to 4, a monitoring periodicity of a search space contains 5 slots, etc. A parameter configuration value of a configuration state #1 of the first parameter includes: a minimum value of a slot offset between DCI and its scheduled PDSCH is equal to 2, max MIMO-layers are equal to 2, a monitoring periodicity of a search space contains 10 slots, etc.

The network device transmits DCI to the terminal. The DCI indicates that an active DL BWP of the terminal is the DL BWP #1, and a value of a first information field in the DCI is 1, indicating that the first parameter used by the terminal on the DL BWP #1 is configured with the state or index 1.

After receiving the DCI, the terminal operates on the DL BWP #1. Configuration information according to the configuration state #1 of the first parameter includes: a minimum value of a slot offset between DCI and its scheduled PDSCH is equal to 2, max MIMO-layers are equal to 2, a monitoring periodicity of a search space contains 10 slots, PDCCH detection reception and PDSCH reception are performed, etc.

It should be noted that in the first example, the configuration state of the first parameter and the active BWP are indicated in the same DCI. In the embodiments of the disclosure, the configuration state of the first parameter and the active BWP may also be indicated in different DCI respectively. For example, the configuration state of the first parameter is indicated via the first DCI, and the scheduled BWP is indicated via the second DCI, which will not be elaborated here.

### Second Example:

A network side configures a DL BWP #1 for a terminal. Configuration information includes a frequency domain position bandwidth of 20 MHz, a subcarrier spacing of 30 kHz, a normal CP, and configuration parameters of PDSCH and PDCCH associated with the BWP #1.

The configuration parameter of PDSCH includes part of configuration parameters of the first parameter: a minimum value of a slot offset between DCI and its scheduled PDSCH, and max MIMO-layers. The slot offset parameters of the DCI and the PDSCH scheduled by the DCI, which are configured by high-layer signaling for the terminal, contain two configuration states, namely, a state or index of 0 and a state or index of 1. The state or index of 0 corresponds to the configuration parameter that the minimum value of the slot offset between the DCI and its scheduled PDSCH is equal to 0. The state or index of 1 corresponds to the configuration parameter that the minimum value of the slot offset between the DCI and its scheduled PDSCH is equal to 2. The max MIMO-layers, which are configured by high-layer signaling for the terminal, contain two configuration states, namely, a state or index of 0 and a state or index of 1. The state or index of 0 corresponds to the configuration parameter that the max MIMO-layers are equal to 4. The state or index of 1 corresponds to the configuration parameter that the max MIMO-layers are equal to 8.

The configuration parameter of PDCCH includes part of configuration parameters of the first parameter: a monitoring periodicity of a search space. A monitoring periodicity of a certain search space, which is configured by high-layer signaling for the terminal, contains two configuration states, namely, a state or index of 0 and a state or index of 1. The state or index of 0 corresponds to the configuration parameter that the monitoring periodicity of the search space contains 5 slots. The state or index of 1 corresponds to the configuration parameter that the monitoring periodicity of the search space contains 10 slots.

The network side transmits DCI to the terminal. The DCI indicates that an active DL BWP of the terminal is the DL BWP #1, and a value of a first DCI field in the DCI is 1, indicating that the first parameter used by the terminal on the DL BWP #1 is configured with the state or index 1.

After receiving the DCI, the terminal operates on the DL BWP #1. Configuration information according to the configuration state #1 of the first parameter includes: a minimum value of a slot offset between DCI and its scheduled PDSCH is equal to 2, max MIMO-layers are equal to 8, a monitoring periodicity of a search space contains 10 slots, PDCCH detection reception and PDSCH reception are performed, etc.

### Third Example:

Example 3 describes a specific implementation of reporting capability of a terminal.

The BWP reporting capability of the terminal is to support adaptation of at most two BWPs via DCI or a timer. The two BWPs may be configured with multiple sets of other parameters respectively besides frequency domain position and bandwidth configuration information, subcarrier spacing configuration information, and CP configuration information. A network device may configure a DL BWP #1 for the terminal, in which a bandwidth is 100 MHz, a subcarrier spacing is 30 kHz, a normal CP is used, but two sets of other parameters may be configured. The first set of parameters is that a minimum value of a slot offset between DCI and its scheduled PDSCH is equal to 0, and a monitoring periodicity of a search space contains 5 slots. The second set of parameters is that a minimum value of a slot offset between DCI and its scheduled PDSCH is equal to 2, and a monitoring periodicity of a search space contains 10 slots. A network side may configure a DL BWP #2 for the terminal, in which a bandwidth is 20MHz, a subcarrier spacing is 30 kHz, a normal CP is used, but two sets of other parameters may be configured. The first set of parameters is that a minimum value of a slot offset between DCI and its scheduled PDSCH is equal to 0, and a monitoring periodicity of a search space contains 5 slots. The second set of parameters is that a minimum value of a slot offset between DCI and its scheduled PDSCH is equal to 2, and a monitoring periodicity of a search space contains 10 slots.

Next, another embodiment of the method for a terminal power saving based on a BWP according to the embodiments of the disclosure will be continuously described.

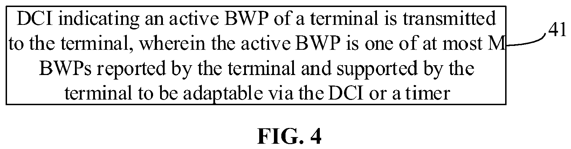

Referring to FIG. 4, a method for a terminal power saving based on a BWP provided by the embodiments of the disclosure, when applied to a network device, includes the following operations.

In operation 41, DCI indicating an active BWP of the terminal is transmitted to the terminal. The active BWP is one of at most M BWPs reported by the terminal and supported by the terminal to be adaptable through the DCI or a timer, and the active BWP includes an active UL BWP or an active DL BWP.

The M BWPs support configuration of T first parameter groups, parameter values of first parameters in different first parameter groups are not identical, and in response to at least two BWPs supporting configuration of the same first parameter group, the at least two BWPs support configuration of second parameter groups with parameter values of second parameters which are not identical, M is an integer equal to or greater than 2, and T is an integer less than M.

The first parameter group includes frequency domain position information, bandwidth configuration information, subcarrier spacing configuration information, and CP configuration information of the BWP.

Through these operations, the embodiments of the disclosure may realize that different BWPs have first parameter groups with identical values, and also have parameter values of second parameters which are not identical, so that rapid conversion of the second parameters may be realized by using different BWPs, and rapid conversion of configuration of parameters for the terminal power saving is further realized.

Here the at least two BWPs support configuration of second parameter groups with parameter values of second parameters that are not identical, it may be that the respective second parameters of the BWPs are not identical in type, it may also be that the second parameters are identical in type but not identical in parameter values, etc.

In addition, in the embodiments of the disclosure, before the operation 41, the network device may also receive a BWP capability parameter of the terminal reported by the terminal. The BWP capability parameter indicates the at most M BWPs supported by the terminal to be adaptable through the DCI or the timer.

The M BWPs support configuration of T first parameter groups, parameter values of first parameters in different first parameter groups are not identical, and in response to at least two BWPs supporting configuration of the same first parameter group, the at least two BWPs support configuration of second parameter groups with parameter values of second parameters which are not identical, M is an integer equal to or greater than 2, and T is an integer less than M.

The first parameter group includes frequency domain position information, bandwidth configuration information, subcarrier spacing configuration information, and CP configuration information of the BWP.

The second parameter group comprises a configuration parameter associated with the BWP other than configuration parameters in the first parameter group. For example, the second parameter group may include one or more of:
minimum value(s) of slot offset k0 between DCI and its scheduled PDSCH;
minimum value(s) of slot offset k2 between DCI and its scheduled PUSCH;
a PDSCH-time domain resource allocation;
a PUSCH-time domain resource allocation;
a minimum value of HARQ feedback timing k1 of the PDSCH;
MIMO-layers;
max MIMO-layers;
number of reception antennas;
number of transmission antennas;
an index of a search space;
a monitoring periodicity of the search space;
monitoring symbol(s) of the search space; or
DRX configuration parameter(s).

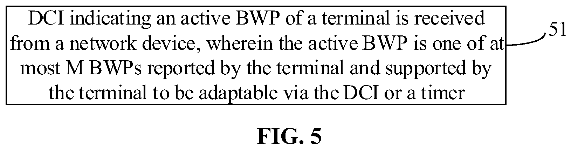

Referring to FIG. 5, a method for a terminal power saving based on a BWP provided by the embodiments of the disclosure, when applied to the terminal, includes the following operations.

In operation 51, DCI indicating an active BWP of the terminal is received from a network device. The active BWP is one of at most M BWPs reported by the terminal and supported by the terminal to be adaptable through the DCI or a timer, and the active BWP includes an active UL BWP or an active DL BWP.

The M BWPs support configuration of T first parameter groups, parameter values of first parameters in different first parameter groups are not identical, and in response to at least two BWPs supporting configuration of the same first parameter group, the at least two BWPs support configuration of second parameter groups with parameter values of second parameters which are not identical, M is an integer equal to or greater than 2, and T is an integer less than M.

The first parameter group includes frequency domain position information, bandwidth configuration information, subcarrier spacing configuration information, and CP configuration information of the BWP.

The second parameter group comprises a configuration parameter associated with the BWP other than configuration parameters in the first parameter group.

Through these operations, the embodiments of the disclosure may realize that different BWPs have first parameter groups with identical values, and also have parameter values of second parameters which are not identical, so that rapid conversion of the second parameters may be realized by using different BWPs, and rapid conversion of configuration of parameters for the terminal power saving is further realized.

In an embodiment, before receiving the DCI in the operation 51, the terminal may also report a BWP capability parameter of the terminal to the network device. The BWP capability parameter indicates whether the terminal supports the at most M BWPs to be adaptable through the DCI or the timer.

The M BWPs support configuration of T first parameter groups, parameter values of first parameters in different first parameter groups are not identical, and in response to at least two BWPs supporting configuration of the same first parameter group, the at least two BWPs support configuration of second parameter groups with parameter values of second parameters which are not identical, M is an integer equal to or greater than 2, and T is an integer less than M.

The first parameter group includes frequency domain position information, bandwidth configuration information, subcarrier spacing configuration information, and CP configuration information of the BWP.

The second parameter group comprises a configuration parameter associated with the BWP other than configuration parameters in the first parameter group. For example, the second parameter group may include one or more of:
minimum value(s) of slot offset k0 between DCI and its scheduled PDSCH;
minimum value(s) of slot offset k2 between DCI and its scheduled PUSCH;
a PDSCH-time domain resource allocation;
a PUSCH-time domain resource allocation;
a minimum value of HARQ feedback timing k1 of the PDSCH;
MIMO-layers;
max MIMO-layers;
number of reception antennas;
number of transmission antennas;
an index of a search space;
a monitoring periodicity of the search space;
monitoring symbol(s) of the search space; or
DRX configuration parameter(s).

An example of the above embodiment is further given below.

### Fourth Example

The BWP reporting capability of a terminal is to support adaptation of at most four BWPs via DCI or a timer. The four BWPs only have two frequency domain position and bandwidth configuration information, subcarrier spacing configuration information, and CP configuration information, and two BWPs with the same frequency domain position and bandwidth configuration information, subcarrier spacing configuration information, and CP configuration information may be configured with different other parameters. Therefore a network side may configure a DL BWP #1 for the terminal, in which a bandwidth is 100 MHz, a subcarrier spacing is 30 kHz, a normal CP is used, and other parameters are that a minimum value of a slot offset between DCI and its scheduled PDSCH is equal to 0, and a monitoring periodicity of a search space contains 5 slots. A DL BWP #2 is configured, in which a bandwidth is 100 MHz, a normal CP is used, a subcarrier spacing is 30 kHz, and other parameters are that a minimum value of a slot offset between DCI and its scheduled PDSCH is equal to 2, and a monitoring periodicity of a search space contains 10 slots. A DL BWP #3 is configured, in which a bandwidth is 20 MHz, a subcarrier spacing is 30 kHz, a normal CP is used, but other parameters are that a minimum value of a slot offset between DCI and its scheduled PDSCH is equal to 0, and a monitoring periodicity of a search space contains 5 slots. A DL BWP #4 is configured, in which a bandwidth is 20 MHz, a subcarrier spacing is 30 kHz, a normal CP is used, and other parameters are that a minimum value of a slot offset between DCI and its scheduled PDSCH is equal to 2, and a monitoring periodicity of a search space contains 10 slots.

Various methods of the embodiments of the disclosure are described as above. Devices for implementing the above methods will be further provided below.

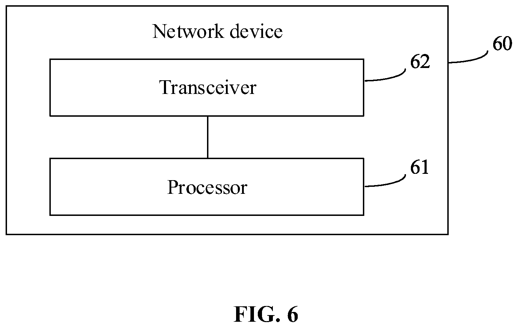

The embodiments not being part of the disclosure provide a network device shown in FIG. 6. Referring to FIG. 6, the embodiments of the disclosure provide a network device 60, which includes a transceiver 62.

The transceiver 62 is configured to transmit first DCI carrying a first information field to a terminal. The first information field indicates one of at least two configuration states or configuration indexes of a first parameter. The first parameter is a configuration parameter associated with an active BWP of the terminal. The active BWP includes an active UL BWP or an active DL BWP.

As an alternative, the first parameter includes at least one of:
minimum value(s) of slot offset k0 between DCI and its scheduled PDSCH;
minimum value(s) of slot offset k2 between DCI and its scheduled PUSCH;
a PDSCH-time domain resource allocation;
a PUSCH-time domain resource allocation;
a minimum value of HARQ feedback timing k1 of the PDSCH;
MIMO-layers;
max MIMO-layers;
number of reception antennas;
number of transmission antennas;
an index of a search space;
a monitoring periodicity of the search space;
monitoring symbol(s) of the search space; or
DRX configuration parameter(s).

In an embodiment, the network device further includes a processor 61.

Before transmitting the first DCI, the processor 61 is configured to determine, according to a determined target configuration state or target configuration index of the first parameter of the active BWP of the terminal, a value of the first information field in the first DCI. Each configuration state or configuration index of the first parameter corresponds to a respective value of the first information field.

In an embodiment, before transmitting the first DCI, the transceiver is further configured to configure, through high-layer signaling, at least two parameter values of at least one parameter in the first parameter for the terminal. Each of the at least two parameter values is associated with a respective one of the at least two configuration states or configuration indexes.

In an embodiment, the at least two parameter values of at least one parameter in the first parameter are configured through an IE associated with the BWP; or,

the at least two parameter values of at least one parameter in the first parameter are configured through an IE associated with a physical channel, the physical channel including at least one of: PDCCH, PUCCH, PDSCH, or PUSCH.

In an embodiment, the first DCI further carries a second information field indicating the active BWP of the terminal;
or,
the transceiver is further configured to transmit, to the terminal, second DCI carrying a third information field indicating the active BWP of the terminal.

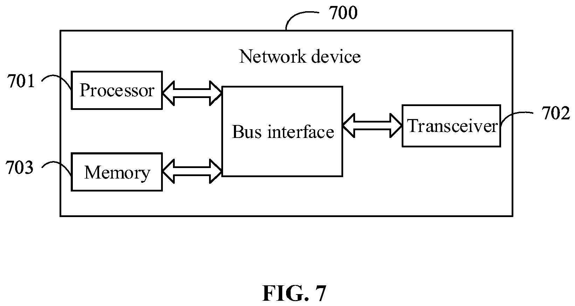

Referring to FIG. 7, the embodiments of the disclosure provide another schematic structural diagram of a network device 700, which includes a processor 701, a transceiver 702, a memory 703, and a bus interface.

The transceiver 702 is configured to transmit first DCI carrying a first information field to a terminal. The first information field indicates one of at least two configuration states or configuration indexes of a first parameter. The first parameter is a configuration parameter associated with an active BWP of the terminal. The active BWP includes an active UL BWP or an active DL BWP.

In FIG. 7, the bus architecture may include any number of interconnected buses and bridges, particularly with various circuits such as one or more processors represented by the processor 701 and a memory represented by the memory 703 linked together. The bus architecture may also link various other circuits such as peripheral devices, voltage regulators, power management circuits, etc., which are well known in the art, and therefore, will not be described further herein. The bus interface provides an interface. The transceiver 702 may contain multiple elements, including a transmitter and a receiver, and providing a unit for communicating with various other devices over a transmission medium.

The processor 701 is responsible for managing the bus architecture and general processing, and the memory 703 may store data used by the processor 701 upon performing operations.

In an embodiment, the processor 701 is configured to read a program in the memory to perform the following processes: before transmitting the first DCI, determining, according to a determined target configuration state or target configuration index of the first parameter of the active BWP of the terminal, a value of the first information field in the first DCI. Each configuration state or configuration index of the first parameter corresponds to a respective value of the first information field.

In an embodiment, before transmitting the first DCI, the transceiver is further configured to configure, through high-layer signaling, at least two parameter values of at least one parameter in the first parameter for the terminal. Each of the at least two parameter values is associated with a respective one of the at least two configuration states or configuration indexes.

In an embodiment, the at least two parameter values of at least one parameter in the first parameter are configured through an IE associated with the BWP; or,

the at least two parameter values of at least one parameter in the first parameter are configured through an IE associated with a physical channel, the physical channel including at least one of: PDCCH, PUCCH, PDSCH, or PUSCH.

In an embodiment, the first DCI further carries a second information field indicating the active BWP of the terminal;
or,
the transceiver is further configured to transmit, to the terminal, second DCI carrying a third information field indicating the active BWP of the terminal.

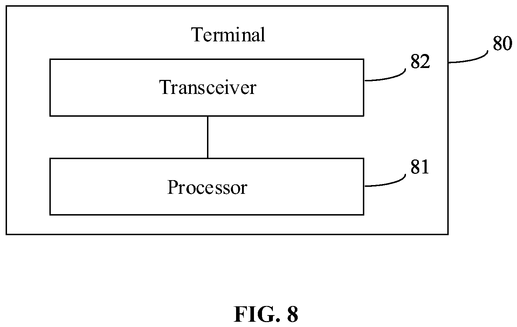

The embodiments not being part of the disclosure provide a terminal shown in FIG. 8. Referring to FIG. 8, the embodiments of the disclosure also provide a terminal 80, which includes a transceiver 82.

The transceiver 82 is configured to receive first DCI carrying a first information field from a network device. The first information field indicates one of at least two configuration states or configuration indexes of a first parameter. The first parameter is a configuration parameter associated with an active BWP of the terminal. The active BWP includes an active UL BWP or an active DL BWP.

In an embodiment, the first parameter includes more of:
minimum value(s) of slot offset k0 between DCI and its scheduled PDSCH;
minimum value(s) of slot offset k2 between DCI and its scheduled PUSCH;
a PDSCH-time domain resource allocation;
a PUSCH-time domain resource allocation;
a minimum value of HARQ feedback timing k1 of the PDSCH;
MIMO-layers;
max MIMO-layers;
number of reception antennas;
number of transmission antennas;
an index of a search space;
a monitoring periodicity of the search space;
monitoring symbol(s) of the search space; or
DRX configuration parameter(s).

In an embodiment, the terminal further includes a processor 81.

After receiving the first DCI, the processor 81 is configured to set, in response to a target configuration state or a target configuration index indicated by the first information field in the first DCI received by the terminal being different from a current configuration state or a current configuration index of the first parameter associated with the active BWP of the terminal, associated configuration information of the first parameter according to the target configuration state or the target configuration index.

In an embodiment, each configuration state or configuration index of the first parameter corresponds to a respective value of the first information field.

In an embodiment, before receiving the first DCI, the transceiver is further configured to receive at least two parameter values of at least one parameter in the first parameter configured by the network device through high-layer signaling. Each of the at least two parameter values is associated with a respective one of the at least two configuration states or configuration indexes.

In an embodiment,
the at least two parameter values of at least one parameter in the first parameter are configured through an IE associated with the BWP; or,
the at least two parameter values of at least one parameter in the first parameter are configured through an IE associated with a physical channel, the physical channel including at least one of: PDCCH, PUCCH, PDSCH, or PUSCH.

In an embodiment, the first DCI further carries a second information field indicating the active BWP of the terminal;
or,
the transceiver is further configured to receive second DCI carrying a third information field indicating the active BWP of the terminal from the network device.

In an embodiment, before receiving the first DCI, the transceiver is further configured to report a BWP capability parameter of the terminal to the network device. The BWP capability parameter indicates whether the terminal supports adaptation of at most N BWPs via DCI or a timer, each of the N BWPs supports being configured with frequency domain position and bandwidth configuration information, subcarrier spacing configuration information, CP configuration information, and at least two parameter values of at least one parameter in the first parameter, and N is an integer equal to or greater than 2.

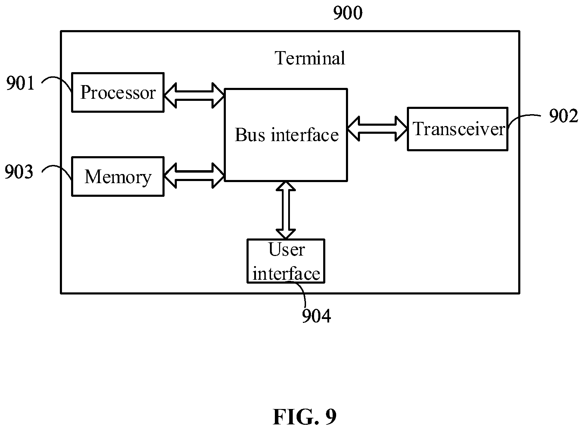

Referring to FIG. 9, the embodiments of the disclosure provide another schematic structural diagram of a terminal. The terminal 900 includes a processor 901, a transceiver 902, a memory 903, a user interface 906, and a bus interface.

In the embodiments of the disclosure, the terminal 900 further includes: a computer program stored on the memory 903 and executable on the processor 901.

The transceiver 902 is configured to receive first DCI carrying a first information field from a network device. The first information field indicates one of at least two configuration states or configuration indexes of a first parameter. The first parameter is a configuration parameter associated with an active BWP of the terminal. The active BWP includes an active UL BWP or an active DL BWP.

In FIG. 9, the bus architecture may include any number of interconnected buses and bridges, particularly with various circuits such as one or more processors represented by the processor 901 and a memory represented by the memory 903 linked together. The bus architecture may also link various other circuits such as peripheral devices, voltage regulators, power management circuits, etc., which are well known in the art, and therefore, will not be described further herein. The bus interface provides an interface. The transceiver 902 may contain multiple elements, including a transmitter and a receiver, and providing a unit for communicating with various other devices over a transmission medium. For different UEs, the user interface 906 may also be an interface capable of externally or internally connecting devices to be connected, including but not limited to keypads, displays, speakers, microphones, joysticks, etc.

The processor 901 is responsible for managing the bus architecture and general processing, and the memory 903 may store data used by the processor 901 upon performing operations.

In an embodiment, the processor 901 is configured to read a program in the memory to perform the following processes: after receiving the first DCI, setting, in response to a target configuration state or a target configuration index indicated by the first information field in the first DCI received by the terminal being different from a current configuration state or a current configuration index of the first parameter associated with the active BWP of the terminal, associated configuration information of the first parameter according to the target configuration state or the target configuration index.

Each configuration state or configuration index of the first parameter corresponds to a respective value of the first information field.

In an embodiment, the transceiver is further configured to receive at least two parameter values of at least one parameter in the first parameter configured by the network device through high-layer signaling. Each of the at least two parameter values is associated with a respective one of the at least two configuration states or configuration indexes.

In an embodiment, the at least two parameter values of at least one parameter in the first parameter are configured through an IE associated with the BWP; or,
the at least two parameter values of at least one parameter in the first parameter are configured through an IE associated with a physical channel, the physical channel including at least one of: PDCCH, PUCCH, PDSCH, or PUSCH.

In an embodiment, the first DCI further carries a second information field for indicating the active BWP of the terminal;
or, the method further includes the following operations.

The transceiver is further configured to receive second DCI carrying a third information field indicating the active BWP of the terminal from the network device.

In an embodiment, before receiving the first DCI, the transceiver is further configured to report a BWP capability parameter of the terminal to the network device. The BWP capability parameter indicates whether the terminal supports adaptation of at most N BWPs via DCI or a timer, each of the N BWPs supports being configured with frequency domain position and bandwidth configuration information, subcarrier spacing configuration information, CP configuration information, and at least two parameter values of at least one parameter in the first parameter, and N is an integer equal to or greater than 2.

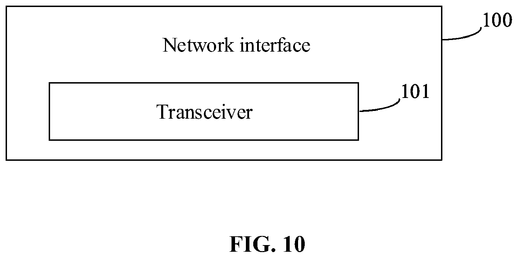

The embodiments not being part of the disclosure provide a network device shown in FIG. 10. Referring to FIG. 10, the embodiments of the disclosure provide a schematic structural diagram of a network device 100, which includes a transceiver 101.

The transceiver 101 is configured to transmit DCI indicating an active BWP of a terminal to the terminal. The active BWP is one of at most M BWPs reported by the terminal and supported by the terminal to be adaptable through the DCI or a timer, and the active BWP includes an active UL BWP or an active DL BWP.

The M BWPs support configuration of T first parameter groups, parameter values of first parameters in different first parameter groups are not identical, and in response to at least two BWPs supporting configuration of the same first parameter group, the at least two BWPs support configuration of second parameter groups with parameter values of second parameters which are not identical, M is an integer equal to or greater than 2, and T is an integer less than M.

The first parameter group includes frequency domain position information, bandwidth configuration information, subcarrier spacing configuration information, and CP configuration information of the BWP.

The second parameter group comprises a configuration parameter associated with the BWP other than configuration parameters in the first parameter group.

In an embodiment, before transmitting the DCI, the transceiver is further configured to receive a BWP capability parameter of the terminal reported by the terminal. The BWP capability parameter indicates the at most M BWPs supported by the terminal to be adaptable through the DCI or the timer.

The M BWPs support configuration of T first parameter groups, parameter values of first parameters in different first parameter groups are not identical, and in response to at least two BWPs supporting configuration of the same first parameter group, the at least two BWPs support configuration of second parameter groups with parameter values of second parameters which are not identical, M is an integer equal to or greater than 2, and T is an integer less than M.

The first parameter group includes frequency domain position information, bandwidth configuration information, subcarrier spacing configuration information, and CP configuration information of the BWP.

The second parameter group comprises a configuration parameter associated with the BWP other than configuration parameters in the first parameter group.

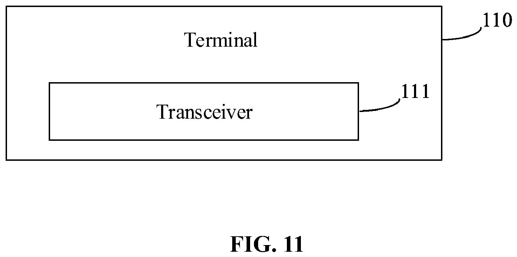

The embodiments not being part of the disclosure provide a terminal shown in FIG. 11. Referring to FIG. 11, the embodiments of the disclosure provide a schematic structural diagram of a terminal 110, which includes a transceiver 111.

The transceiver 111 is configured to receive DCI indicating an active BWP of the terminal from a network device. The active BWP is one of at most M BWPs reported by the terminal and supported by the terminal to be adaptable through the DCI or a timer, and the active BWP includes an active UL BWP or an active DL BWP.

The M BWPs support configuration of T first parameter groups, parameter values of first parameters in different first parameter groups are not identical, and in response to at least two BWPs supporting configuration of the same first parameter group, the at least two BWPs support configuration of second parameter groups with parameter values of second parameters which are not identical, M is an integer equal to or greater than 2, and T is an integer less than M.

The first parameter group includes frequency domain position information, bandwidth configuration information, subcarrier spacing configuration information, and CP configuration information of the BWP.

The second parameter group comprises a configuration parameter associated with the BWP other than configuration parameters in the first parameter group.

In an embodiment, before receiving the DCI, the transceiver is further configured to report a BWP capability parameter of the terminal to the network device. The BWP capability parameter indicates whether the terminal supports the at most M BWPs to be adaptable through the DCI or the timer.

The M BWPs support configuration of T first parameter groups, parameter values of first parameters in different first parameter groups are not identical, and in response to at least two BWPs supporting configuration of the same first parameter group, the at least two BWPs support configuration of second parameter groups with parameter values of second parameters which are not identical, M is an integer equal to or greater than 2, and T is an integer less than M.

The first parameter group includes frequency domain position information, bandwidth configuration information, subcarrier spacing configuration information, and CP configuration information of the BWP.

The second parameter group comprises a configuration parameter associated with the BWP other than configuration parameters in the first parameter group.

Those of ordinary skill in the art may realize that the units and algorithm steps of each example described in combination with the embodiments disclosed herein may be implemented by an electronic hardware or a combination of the electronic hardware and a computer software. Whether these functions are executed in a hardware or software manner depends on specific applications and design constraints of the technical solutions. Professionals may implement the described functions for each specific application by use of different methods, but such implementation shall not be considered as going beyond the scope of the disclosure.

Those skilled in the art may clearly learn that specific working processes of the system, device and unit as described above may refer to the corresponding processes in the above-mentioned method embodiments and will not be elaborated herein, for convenient and brief description.

In the embodiments provided by the disclosure, it should be understood that the disclosed device and method may be implemented in another manner. For example, the device embodiments as described above are only schematic, for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection implemented through some interfaces, devices or units, and may be electrical and mechanical, or adopt other forms.

The units described as separate parts may or may not be physically separated, and parts displayed as units may or may not be physical units, namely, may be located in the same place, or may also be distributed to multiple network units. Part or all of the units may be selected to achieve the purpose of the solutions of the embodiments of the disclosure according to a practical requirement.

In addition, each functional unit in each of the embodiments of the disclosure may be integrated into a processing unit, each unit may also physically exist independently, or two or more than two units may also be integrated into a unit.

When being realized in form of software functional unit and sold or used as an independent product, the function may be stored in a computer-readable storage medium. Based on such an understanding, the technical solutions of the disclosure substantially or parts making contributions to the related art or part of the technical solutions may be embodied in form of a software product, and the computer software product is stored in a storage medium, including multiple instructions configured to enable a computer device (which may be a personal computer, a server, a network device or the like) to execute all or part of the steps of the method according to each of the embodiments of the disclosure. The foregoing storage medium includes: various media capable of storing program codes such as a U disk, a mobile hard disk, a Read-Only Memory (ROM), a Random Access Memory (RAM), a magnetic disk, or an optical disk, etc.

The above description is only the specific implementation of the disclosure and not intended to limit the scope of protection of the disclosure. Therefore, the scope of protection of the disclosure should be determined by the scope of protection of the claims. The invention is defined by the appended claims.

## Claims

1. A method for a terminal power saving based on a Bandwidth Part, BWP, executed by a network device, the method comprising:
transmitting (21) first Downlink Control Information, DCI, carrying a first information field to the terminal, wherein the first information field indicates one of at least two configuration states or configuration indexes of a first parameter, the first parameter is a configuration parameter associated with an active BWP of the terminal, the first parameter comprises a plurality of parameters, and each of the at least two configuration states or configuration indexes of the first parameter corresponds to values of the plurality of parameters comprised in the first parameter; and the each configuration state or configuration index of the first parameter corresponds to a respective value of the first information field, **characterized in that** the first DCI further carries a second information field indicating the active BWP of the terminal, and the first parameter comprises:
a minimum value of slot offset between DCI and its scheduled Physical Downlink Shared Channel, PDSCH,
a minimum value of slot offset between DCI and its scheduled Physical Uplink Shared Channel, PUSCH, and
a minimum value of Hybrid Automatic Repeat Request, HARQ, feedback timing of the PDSCH.

2. The method of claim 1, wherein the first parameter further comprises at least one of:
a PDSCH-time domain resource allocation;
a PUSCH-time domain resource allocation;
Multiple Input Multiple Output, MIMO-layers;
max MIMO-layers;
number of reception antennas;
number of transmission antennas;
an index of a search space;
a monitoring periodicity of the search space;
a monitoring symbol of the search space; or
a Discontinuous Reception, DRX, configuration parameter.

3. The method of claim 1 or 2, further comprising:
before transmitting the first DCI,
determining, according to a determined target configuration state or target configuration index of the first parameter of the active BWP of the terminal, a value of the first information field in the first DCI.

4. The method of claim 1 or 2, further comprising:
before transmitting the first DCI,
configuring, through high-layer signaling, at least two parameter values of at least one parameter in the first parameter for the terminal, each of the at least two parameter values being associated with a respective one of the at least two configuration states or configuration indexes.

5. A method for a terminal power saving based on a Bandwidth Part, BWP, executed by the terminal, the method comprising:
receiving (31) first Downlink Control Information, DCI, carrying a first information field from a network device, wherein the first information field indicates one of at least two configuration states or configuration indexes of a first parameter, the first parameter is a configuration parameter associated with an active BWP of the terminal, the first parameter comprises a plurality of parameters, and each of the at least two configuration states or configuration indexes of the first parameter corresponds to values of the plurality of parameters comprised in the first parameter; and the each configuration state or configuration index of the first parameter corresponds to a respective value of the first information field, **characterized in that** the first DCI further carries a second information field indicating the active BWP of the terminal, and the first parameter comprises:
a minimum value of slot offset between DCI and its scheduled Physical Downlink Shared Channel, PDSCH,
a minimum value of slot offset between DCI and its scheduled Physical Uplink Shared Channel, PUSCH, and
a minimum value of Hybrid Automatic Repeat Request, HARQ, feedback timing of the PDSCH.

6. The method of claim 5, wherein the first parameter further comprises at least one of:
a PDSCH-time domain resource allocation;
a PUSCH-time domain resource allocation;
Multiple Input Multiple Output, MIMO-layers;
max MIMO-layers;
number of reception antennas;
number of transmission antennas;
an index of a search space;
a monitoring periodicity of the search space;
a monitoring symbol of the search space; or
a Discontinuous Reception, DRX, configuration parameter.

7. The method of claim 5 or 6, further comprising:
after receiving the first DCI,
in response to a target configuration state or a target configuration index indicated by the first information field in the first DCI received by the terminal being different from a current configuration state or a current configuration index of the first parameter associated with the active BWP of the terminal, setting, according to the target configuration state or the target configuration index, associated configuration information of the first parameter.

8. The method of claim 5 or 6, further comprising:
before receiving the first DCI,
receiving at least two parameter values of at least one parameter in the first parameter configured by the network device through high-layer signaling, each of the at least two parameter values being associated with a respective one of the at least two configuration states or configuration indexes.

9. The method of claim 8, wherein
the at least two parameter values of at least one parameter in the first parameter are configured through an Information Element, IE, associated with the BWP; or,
the at least two parameter values of at least one parameter in the first parameter are configured through an IE associated with a physical channel, the physical channel comprising at least one of: Physical Downlink Control Channel, PDCCH, Physical Uplink Control Channel, PUCCH, Physical Downlink Shared Channel, PDSCH, or Physical Uplink Shared Channel, PUSCH.

10. The method of any one of claims 5 to 9, further comprising:
before receiving the first DCI,
reporting a BWP capability parameter of the terminal to the network device, the BWP capability parameter indicating whether the terminal supports adaptation of at most N BWPs via DCI or a timer, wherein each of the N BWPs supports being configured with frequency domain position and bandwidth configuration information, subcarrier spacing configuration information, Cyclic Prefix, CP, configuration information, and at least two parameter values of at least one parameter in the first parameter, N being an integer equal to or greater than 2.

11. A network device (700), comprising: a processor (701), a transceiver (702) and a memory (703) for storing a computer program executable on the processor (701), wherein the computer program comprises instructions which, when executed by the processor (701) of the network device (700), cause the network device (700) to implement the steps of the method of any one of claims 1 to 4.

12. A terminal (900), comprising: a processor (901), a transceiver (902) and a memory (903) for storing a computer program executable on the processor (901), wherein the computer program comprises instructions which, when executed by the processor (901) of the terminal (900), cause the terminal (900) to implement the steps of the method of any one of claims 5 to 10.

13. A computer-readable storage medium, having stored thereon a computer program, wherein the computer program comprises instructions which, when executed by a processor, cause the processor to implement the steps of the method of any one of claims 1 to 4, or the steps of the method of any one of claims 5 to 10.

## Patentansprüche

1. Verfahren zum Energiesparen eines Endgeräts auf Grundlage eines Bandbreitenteils, BWP, das von einer Netzwerkvorrichtung ausgeführt wird, wobei das Verfahren umfasst:
Übertragen (21) erster Downlink-Steuerinformationen, DCI, die ein erstes Informationsfeld tragen, an das Endgerät, wobei das erste Informationsfeld einen von wenigstens zwei Konfigurationszuständen oder Konfigurationsindizes eines ersten Parameters anzeigt, der erste Parameter ein Konfigurationsparameter ist, der einem aktiven BWP des Endgeräts zugeordnet ist, der erste Parameter eine Mehrzahl von Parametern umfasst und jeder der wenigstens zwei Konfigurationszustände oder Konfigurationsindizes des ersten Parameters Werten der Mehrzahl von Parametern entspricht, die in dem ersten Parameter enthalten sind; und der jede Konfigurationszustand oder Konfigurationsindex des ersten Parameters einem jeweiligen Wert des ersten Informationsfelds entspricht, **dadurch gekennzeichnet, dass** die ersten DCI ferner ein zweites Informationsfeld tragen, das das aktive BWP des Endgerätes anzeigt, und der erste Parameter umfasst:
einen Mindestwert des Slot-Versatzes zwischen DCI und ihren geplantem Physical Downlink Shared Channel, PDSCH,
einen Mindestwert des Slot-Versatzes zwischen DCI und ihren geplantem Physical Uplink Shared Channel, PUSCH, und
einen Mindestwert für die Hybrid Automatic Repeat Request, HARQ-, Rückmeldungszeitplanung des PDSCH.

2. Verfahren nach Anspruch 1, wobei der erste Parameter ferner wenigstens eine/eines der umfasst von:
einer PDSCH-Zeitdomänen-Ressourcenzuweisung;
einer PUSCH-Zeitdomänen-Ressourcenzuweisung;
Schichten mit mehrfachen Eingaben und Ausgaben, MIMO-Schichten;
maximalen MIMO-Schichten;
Anzahl der Empfangsantennen;
Anzahl der Sendeantennen;
einem Index eines Suchraums;
einer Überwachungsperiodizität des Suchraums;
einem Überwachungssymbol des Suchraums; oder
einem Konfigurationsparameter für den diskontinuierlichen Empfang, DRX.

3. Verfahren nach Anspruch 1 oder 2, das ferner umfasst:
vor dem Übertragen der ersten DCI,
Bestimmen eines Wertes des ersten Informationsfeldes in den ersten DCI gemäß einem bestimmten Zielkonfigurationszustand oder Zielkonfigurationsindex des ersten Parameters des aktiven BWP des Endgeräts.

4. Verfahren nach Anspruch 1 oder 2, das ferner umfasst:
vor dem Übertragen der ersten DCI,
Konfigurieren von wenigstens zwei Parameterwerten wenigstens eines Parameters in dem ersten Parameter für das Endgerät durch Hochschichtsignalisierung, wobei jeder der wenigstens zwei Parameterwerte einem jeweiligen einen der wenigstens zwei Konfigurationszustände oder Konfigurationsindizes zugeordnet ist.

5. Verfahren zum Energiesparen eines Endgeräts auf Grundlage eines Bandbreitenanteils (BWP), der von dem Endgerät ausgeführt wird, wobei das Verfahren umfasst:
Empfangen (31) erster Downlink-Steuerinformationen, DCI, die ein erstes Informationsfeld tragen, von einer Netzwerkvorrichtung, wobei das erste Informationsfeld einen von wenigstens zwei Konfigurationszuständen oder Konfigurationsindizes eines ersten Parameters anzeigt, der erste Parameter ein Konfigurationsparameter ist, der einem aktiven BWP des Endgeräts zugeordnet ist, der erste Parameter eine Mehrzahl von Parametern umfasst und jeder der wenigstens zwei Konfigurationszustände oder Konfigurationsindizes des ersten Parameters Werten der Mehrzahl von Parametern entspricht, die in dem ersten Parameter enthalten sind; und der jede Konfigurationszustand oder Konfigurationsindex des ersten Parameters einem jeweiligen Wert des ersten Informationsfelds entspricht, **dadurch gekennzeichnet, dass** die ersten DCI ferner ein zweites Informationsfeld tragen, das das aktive BWP des Endgerätes anzeigt, und der erste Parameter umfasst:
einen Mindestwert des Slot-Versatzes zwischen DCI und ihren geplantem Physical Downlink Shared Channel, PDSCH,
einen Mindestwert des Slot-Versatzes zwischen DCI und ihren geplantem Physical Uplink Shared Channel, PUSCH, und
einen Mindestwert für die Hybrid Automatic Repeat Request, HARQ-, Rückmeldungszeitplanung des PDSCH.

6. Verfahren nach Anspruch 5, wobei der erste Parameter ferner wenigstens eine/eines der umfasst von:
einer PDSCH-Zeitdomänen-Ressourcenzuweisung;
einer PUSCH-Zeitdomänen-Ressourcenzuweisung;
Schichten mit mehrfachen Eingaben und Ausgaben, MIMO-Schichten;
maximalen MIMO-Schichten;
Anzahl der Empfangsantennen;
Anzahl der Sendeantennen;
einem Index eines Suchraums;
einer Überwachungsperiodizität des Suchraums;
einem Überwachungssymbol des Suchraums; oder
einem Konfigurationsparameter für den diskontinuierlichen Empfang, DRX.

7. Verfahren nach Anspruch 5 oder 6, das ferner umfasst:
nach Empfangen der ersten DCI,
als Reaktion darauf, dass sich ein Zielkonfigurationszustand oder ein Zielkonfigurationsindex, der durch das erste Informationsfeld in den von dem Endgerät empfangenen ersten DCI angezeigt wird, von einem aktuellen Konfigurationszustand oder einem aktuellen Konfigurationsindex des ersten Parameters, der dem aktiven BWP des Endgeräts zugeordnet ist, unterscheidet, Einstellen von zugeordneten Konfigurationsinformationen des ersten Parameters gemäß dem Zielkonfigurationszustand oder dem Zielkonfigurationsindex.

8. Verfahren nach Anspruch 5 oder 6, das ferner umfasst:
vor dem Empfangen der ersten DCI,
Empfangen von wenigstens zwei Parameterwerten von wenigstens einem Parameter in dem ersten Parameter der von der Netzwerkvorrichtung über Hochschichtsignalisierung konfiguriert ist, wobei jeder der wenigstens zwei Parameterwerte einem jeweiligen einen der wenigstens zwei Konfigurationszustände oder Konfigurationsindizes zugeordnet ist.

9. Verfahren nach Anspruch 8, wobei
die wenigstens zwei Parameterwerte wenigstens eines Parameters in dem ersten Parameter durch ein Informationselement, IE, konfiguriert werden, das dem BWP zugeordnet ist; oder,
die wenigstens zwei Parameterwerte wenigstens eines Parameters in dem ersten Parameter über eine IE konfiguriert werden, die einem physikalischen Kanal zugeordnet ist, wobei der physikalische Kanal wenigstens eines umfasst von: Physical Downlink Control Channel, PDCCH, Physical Uplink Control Channel, PUCCH, Physical Downlink Shared Channel, PDSCH, oder Physical Uplink Shared Channel, PUSCH.

10. Verfahren nach einem der Ansprüche 5 bis 9, das ferner umfasst:
vor dem Empfangen der ersten DCI,
Melden eines BWP-Fähigkeitsparameters des Endgeräts an die Netzvorrichtung, wobei der BWP-Fähigkeitsparameter anzeigt, ob das Endgerät die Anpassung von höchstens N BWPs über DCI oder einen Zeitgeber unterstützt, wobei jeder der N BWPs unterstützt, mit Frequenzdomänenpositions- und Bandbreitenkonfigurationsinformationen, Unterträgerabstandskonfigurationsinformationen, zyklischen Präfix-, CP-, Konfigurationsinformationen und wenigstens zwei Parameterwerten von wenigstens einem Parameter in dem ersten Parameter konfiguriert zu werden, wobei N eine ganze Zahl gleich oder größer als 2 ist.

11. Netzwerkvorrichtung (700), umfassend: einen Prozessor (701), einen Sendeempfänger (702) und einen Speicher (703) zum Speichern eines Computerprogramms, das auf dem Prozessor (701) ausführbar ist, wobei das Computerprogramm Anweisungen umfasst, die, wenn sie von dem Prozessor (701) der Netzwerkvorrichtung (700) ausgeführt werden, die Netzwerkvorrichtung (700) veranlassen, die Schritte des Verfahrens nach einem der Ansprüche 1 bis 4 zu implementieren.

12. Endgerät (900), umfassend: einen Prozessor (901), einen Sendeempfänger (902) und einen Speicher (903) zum Speichern eines Computerprogramms, das auf dem Prozessor (901) ausführbar ist, wobei das Computerprogramm Anweisungen umfasst, die, wenn sie von dem Prozessor (901) des Endgeräts (900) ausgeführt werden, das Endgerät (900) veranlassen, die Schritte des Verfahrens nach einem der Ansprüche 5 bis 10 zu implementieren.

13. Computerlesbares Speichermedium mit darauf gespeichertem Computerprogramm, wobei das Computerprogramm Anweisungen umfasst, die, wenn sie einem Prozessor ausgeführt werden, den Prozessor veranlassen, die Schritte des Verfahrens nach einem der Ansprüche 1 bis 4 oder die Schritte des Verfahrens nach einem der Ansprüche 5 bis 10 zu implementieren.

## Revendications

1. Procédé pour économies d'énergie d'un terminal sur la base d'une partie de largeur de bande, BWP, exécuté par un dispositif de réseau, le procédé comprenant :
la transmission (21) de premières informations de commande de liaison descendante, DCI, portant un premier champ d'informations au terminal, dans lequel le premier champ d'informations indique un d'au moins deux états de configuration ou indices de configuration d'un premier paramètre, le premier paramètre est un paramètre de configuration associé à une BWP active du terminal, le premier paramètre comprend une pluralité de paramètres, et chacun des au moins deux états de configuration ou indices de configuration du premier paramètre correspond à des valeurs de la pluralité de paramètres compris dans le premier paramètre ; et chaque état de configuration ou indice de configuration du premier paramètre correspond à une valeur respective du premier champ d'informations, **caractérisé en ce que** les premières DCI portent en outre un second champ d'informations indiquant la BWP active du terminal, et le premier paramètre comprend :
une valeur minimum de décalage de créneau entre des DCI et leur canal partagé de liaison descendante physique, PDSCH, ordonnancé,
une valeur minimum de décalage de créneau entre des DCI et leur canal partagé de liaison montante physique, PUSCH, ordonnancé, et
une valeur minimum d'instant de rétroaction de demande de répétition automatique hybride, HARQ, du PDSCH.

2. Procédé selon la revendication 1, dans lequel le premier paramètre comprend en outre au moins un parmi :
une attribution de ressources de domaine temporel de PDSCH ;
une attribution de ressources de domaine temporel de PUSCH ;
des couches entrées multiples-sorties multiples, MIMO ;
des couches MIMO max ;
un nombre d'antennes de réception ;
un nombre d'antennes de transmission ;
un indice d'un espace de recherche ;
une périodicité de surveillance de l'espace de recherche ;
un symbole de surveillance de l'espace de recherche ; ou
un paramètre de configuration de réception discontinue, DRX.

3. Procédé selon la revendication 1 ou 2, comprenant en outre :
avant la transmission des premières DCI,
la détermination, selon un état de configuration cible ou indice de configuration cible déterminé du premier paramètre de la BWP active du terminal, d'une valeur du premier champ d'informations dans les premières DCI.

4. Procédé selon la revendication 1 ou 2, comprenant en outre :
avant la transmission des premières DCI,
la configuration, par le biais de signalisation de haute couche, d'au moins deux valeurs de paramètre d'au moins un paramètre dans le premier paramètre pour le terminal, chacune des au moins deux valeurs de paramètre étant associée à un respectif des au moins deux états de configuration ou indices de configuration.

5. Procédé pour économies d'énergie d'un terminal sur la base d'une partie de largeur de bande, BWP, exécuté par le terminal, le procédé comprenant :
la réception (31) de premières informations de commande de liaison descendante, DCI, portant un premier champ d'informations, à partir d'un dispositif de réseau, dans lequel le premier champ d'informations indique un d'au moins deux états de configuration ou indices de configuration d'un premier paramètre, le premier paramètre est un paramètre de configuration associé à une BWP active du terminal, le premier paramètre comprend une pluralité de paramètres, et chacun des au moins deux états de configuration ou indices de configuration du premier paramètre correspond à des valeurs de la pluralité de paramètres compris dans le premier paramètre ; et chaque état de configuration ou indice de configuration du premier paramètre correspond à une valeur respective du premier champ d'informations, **caractérisé en ce que** les premières DCI portent en outre un second champ d'informations indiquant la BWP active du terminal, et le premier paramètre comprend :
une valeur minimum de décalage de créneau entre des DCI et leur canal partagé de liaison descendante physique, PDSCH, ordonnancé,
une valeur minimum de décalage de créneau entre des DCI et leur canal partagé de liaison montante physique, PUSCH, ordonnancé, et
une valeur minimum d'instant de rétroaction de demande de répétition automatique hybride, HARQ, du PDSCH.

6. Procédé selon la revendication 5, dans lequel le premier paramètre comprend en outre au moins un parmi :
une attribution de ressources de domaine temporel de PDSCH ;
une attribution de ressources de domaine temporel de PUSCH ;
des couches entrées multiples-sorties multiples, MIMO ;
des couches MIMO max ;
un nombre d'antennes de réception ;
un nombre d'antennes de transmission ;
un indice d'un espace de recherche ;
une périodicité de surveillance de l'espace de recherche ;
un symbole de surveillance de l'espace de recherche ; ou
un paramètre de configuration de réception discontinue, DRX.

7. Procédé selon la revendication 5 ou 6, comprenant en outre :
après la réception des premières DCI,
en réponse au fait qu'un état de configuration cible ou un indice de configuration cible indiqué par le premier champ d'informations dans les premières DCI reçues par le terminal est différent d'un état de configuration actuel ou d'un indice de configuration actuel du premier paramètre associé à la BWP active du terminal, le réglage, selon l'état de configuration cible ou l'indice de configuration cible, d'informations de configuration associées du premier paramètre.

8. Procédé selon la revendication 5 ou 6, comprenant en outre :
avant la réception des premières DCI,
la réception d'au moins deux valeurs de paramètre d'au moins un paramètre dans le premier paramètre configuré par le dispositif de réseau par le biais de signalisation de haute couche, chacune des au moins deux valeurs de paramètre étant associée à un respectif des au moins deux états de configuration ou indices de configuration.

9. Procédé selon la revendication 8, dans lequel
les au moins deux valeurs de paramètre d'au moins un paramètre dans le premier paramètre sont configurées par le biais d'un élément d'informations, IE, associé à la BWP ; ou,
les au moins deux valeurs de paramètre d'au moins un paramètre dans le premier paramètre sont configurées par le biais d'un IE associé à un canal physique, le canal physique comprenant au moins un parmi : canal de commande de liaison descendante physique, PDCCH, canal de commande de liaison montante physique, PUCCH, canal partagé de liaison descendante physique, PDSCH, ou canal partagé de liaison montante physique, PUSCH.

10. Procédé selon l'une quelconque des revendications 5 à 9, comprenant en outre :
avant la réception des premières DCI,
l'envoi du rapport d'un paramètre de capacité de BWP du terminal au dispositif de réseau, le paramètre de capacité de BWP indiquant si le terminal prend en charge une adaptation d'au plus N BWPs par l'intermédiaire de DCI ou d'une minuterie, dans lequel chacune des N BWPs peut être configurée avec des informations de configuration de position de domaine fréquentiel et de largeur de bande, des informations de configuration d'espacement de sous-porteuses, des informations de configuration de préfixe cyclique, CP, et au moins deux valeurs de paramètre d'au moins un paramètre dans le premier paramètre, N étant un nombre entier relatif égal ou supérieur à 2.

11. Dispositif de réseau (700), comprenant : un processeur (701), un transmetteur-récepteur (702) et une mémoire (703) pour stocker un programme d'ordinateur exécutable sur le processeur (701), dans lequel le programme d'ordinateur comprend des instructions qui, lorsqu'elles sont exécutées par le processeur (701) du dispositif de réseau (700), font en sorte que le dispositif de réseau (700) mette en oeuvre les étapes du procédé de l'une quelconque des revendications 1 à 4.

12. Terminal (900), comprenant : un processeur (901), un transmetteur-récepteur (902) et une mémoire (903) pour stocker un programme d'ordinateur exécutable sur le processeur (901), dans lequel le programme d'ordinateur comprend des instructions qui, lorsqu'elles sont exécutées par le processeur (901) du terminal (900), font en sorte que le terminal (900) mette en oeuvre les étapes du procédé de l'une quelconque des revendications 5 à 10.

13. Support de stockage lisible par ordinateur, ayant, stocké sur celui-ci, un programme d'ordinateur, dans lequel le programme d'ordinateur comprend des instructions qui, lorsqu'elles sont exécutées par un processeur, font en sorte que le processeur mette en oeuvre les étapes du procédé de l'une quelconque des revendications 1 à 4, ou les étapes du procédé de l'une quelconque des revendications 5 à 10.
